# EUROPEAN PATENT APPLICATION

(11) **EP 4 576 469 A1**
(43) Date of publication of application: **25.06.2025**
(21) Application number: 24218942.1
(22) Date of filing: 11.12.2024
(51) Int. Cl.: H02H 9/04

(54) **ELECTRICAL OVERSTRESS PROTECTION DEVICE AND COMMUNICATION SYSTEM**

(30) Priority: 20.12.2023 US 202363612377 P; 19.11.2024 TW 113144446
(71) Applicant: RichWave Technology Corp., Taipei 11493 (TW)
(72) Inventor: CHAO, Chuan-Chen, 11493 Taipei (TW); PAI, Ching-Yao, 11493 Taipei (TW); WU, Yu-Cheng, 11493 Taipei (TW)
(74) Representative: Becker, Eberhard

(57) **Abstract**

Disclosed are an electrical overstress protection device (220) and a communication system (200, 300, 400). A core circuit (211) receives signals through a communication signal terminal (P11, P21). The EOS protection device (220) includes an impedance switching element (221) and an EOS protection element (120, 222). A first terminal of the impedance switching element (221) is coupled between the communication signal terminal (P11, P21) and a switch element (SW31, SW32) of the core circuit (211). A first terminal of the EOS protection element (120, 222) is coupled to a second terminal of the impedance switching element (221). The second terminal of the EOS protection element (120, 222) is coupled to a reference voltage (Vref11, Vref21). When operating normally, the impedance switching element (221) controllably provides a high impedance to be turned off.

## Description

### BACKGROUND

### Technical Field

The present disclosure relates to a circuit protection technology, and particularly relates to an electrical overstress (EOS) protection device and a communication system.

### Description of Related Art

Electrical Overstress (EOS) protection elements are utilized to provide a shunt path for EOS (e.g., static electricity, surge, etc.) energy and prevent internal circuits (core circuits) of integrated circuits from being damaged by EOS. EOS protection elements are typically configured between signal lines (signal lines from connection ports to core circuits) and reference voltages (e.g., ground voltage GND).

However, current common EOS protection elements have some trade-offs in their design. For example, transient voltage suppressors (TVS) elements might have lower trigger voltages, but due to the characteristics of silicon materials, TVS elements introduce relatively large harmonic distortions. On the other hand, Polymer ESD Suppressor (PES) elements are less likely to exhibit harmonic distortions in the GHz range, but might have high trigger voltages (unfavorable for EOS protection). Balancing electrical performance and EOS protection design is one of the many technical challenges in this field.

It should be noted that the content of the "Description of Related Art" section is used to help understand the present disclosure. Some or all of the content disclosed in the "Description of Related Art" section may not be known technology to those skilled in the art. The content disclosed in the "Description of Related Art" section does not represent that such content was known to those skilled in the art before filing of the present disclosure.

### SUMMARY

The present disclosure provides an electrical overstress (EOS) protection device and a communication system to prevent EOS energy from damaging the core circuit.

In an embodiment of the present disclosure, the aforementioned electrical overstress protection device is configured to protect the core circuit. The core circuit receives a signal through a communication signal terminal. The electrical overstress protection device includes an impedance switching element and an electrical overstress protection element. The impedance switching element includes a first terminal and a second terminal. The first terminal of the impedance switching element is coupled to the core circuit. The electrical overstress protection element includes a first terminal and a second terminal. The first terminal of the electrical overstress protection element is coupled to the second terminal of the impedance switching element. The second terminal of the electrical overstress protection element is coupled to a reference voltage. During normal operation, the impedance switching element may controllably provide a high impedance to be turned off. During electrical overstress discharge operation, the impedance switching element provides a low impedance to be turned on, so as to release charge to the reference voltage through the electrical overstress protection element.

In an embodiment of the present disclosure, the communication system includes a communication signal terminal, a core circuit, an impedance switching element, and an electrical overstress protection element. The core circuit includes a switch element and a communication signal release element. The first terminal of the switch element is coupled to the communication signal terminal. The communication signal release element is connected across the second terminal of the switch element and a reference voltage. The impedance switching element includes a first terminal and a second terminal. The first terminal of the impedance switching element is coupled to the communication signal terminal. The electrical overstress protection element is coupled between the second terminal of the impedance switching element and the reference voltage. The electrical overstress protection element has noise greater than -70dBm in the frequency range of 10KHz to 10GHz. During normal operation, the communication signal release element may be controllably turned on to conduct the communication signal to the reference voltage. During electrical overstress discharge operation, the impedance switching element provides a low impedance to be turned on, so as to release charge to the reference voltage through the electrical overstress protection element.

To make the above-mentioned features and advantages of the present disclosure more evident and understandable, embodiments are specifically cited below, and detailed explanations are provided in conjunction with the accompanying drawings as follows.

### BRIEF DESCRIPTION OF THE DRAWINGS

FIG. 1 is a radio frequency system with a protection device.
FIG. 2 is a circuit block diagram of a communication system according to an embodiment of the present disclosure.
FIG. 3 is a circuit block diagram of a communication system according to another embodiment of the present disclosure.
FIG. 4 is a circuit block diagram of a communication system according to yet another embodiment of the present disclosure.
FIG. 5 is a circuit block diagram illustrating the core circuit, impedance switching element, and electrical overstress (EOS) protection element according to an embodiment of the present disclosure.
FIG. 6 is a circuit block diagram illustrating the core circuit according to another embodiment of the present disclosure.
FIG. 7 is a circuit block diagram illustrating the impedance switching element according to an embodiment of the present disclosure.
FIG. 8 is a circuit block diagram illustrating the impedance switching element according to another embodiment of the present disclosure.
FIG. 9 is a circuit block diagram illustrating the impedance switching element according to still another embodiment of the present disclosure.

### DESCRIPTION OF THE EMBODIMENTS

In the entire specification (including the claims) of the present disclosure, the term "couple (or connect)" may refer to any direct or indirect connection means. For example, if the text describes that a first device is coupled (or connected) to a second device, it should be interpreted that the first device may be directly connected to the second device, or the first device may be indirectly connected to the second device through other devices or some connection means. The terms "first", "second", etc. mentioned in the entire specification (including the claims) of the present disclosure are used to name elements or distinguish different embodiments or ranges, and are not used to limit the upper or lower limit of the number of elements, nor to limit the order of elements. In addition, where possible, the same reference numbers for elements/structures/steps in the drawings and embodiments represent the same or similar parts. Elements/structures/steps with the same reference numbers or using the same terms in different embodiments may be inferred from related descriptions.

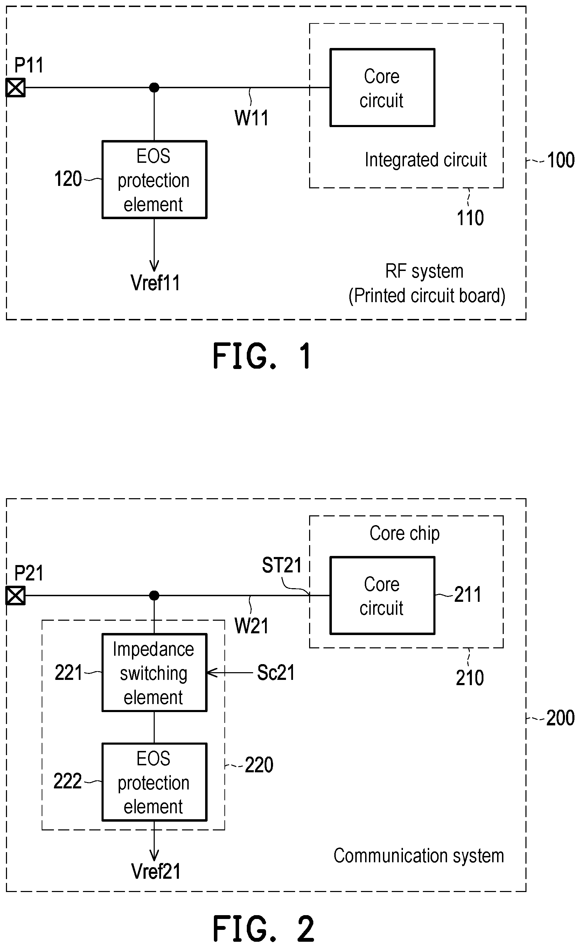

FIG. 1 is a radio frequency (RF) system 100 with a protection device. The RF system 100 includes a communication signal terminal P11, an integrated circuit 110, and an electrical overstress (EOS) protection element 120 arranged on a printed circuit board (PCB). A signal line W11 is connected between the communication signal terminal P11 and the integrated circuit 110. The EOS protection element 120 is coupled between the signal line W11 and a reference voltage Vref11 (for example, ground voltage). The EOS protection element 120 is triggered by an EOS event (for example, an electrostatic discharge event, ESD event). When the EOS protection element 120 is triggered, the EOS protection element 120 provides a low impedance path between the signal line W11 and the reference voltage Vref11 to protect the core circuit of the integrated circuit 110 from being damaged by EOS energy. However, the EOS protection element 120 may introduce relatively large harmonic distortion.

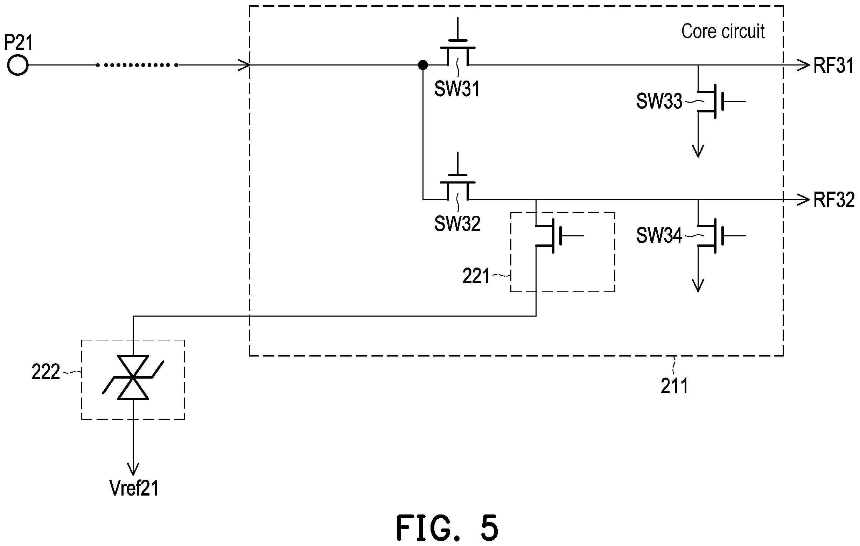

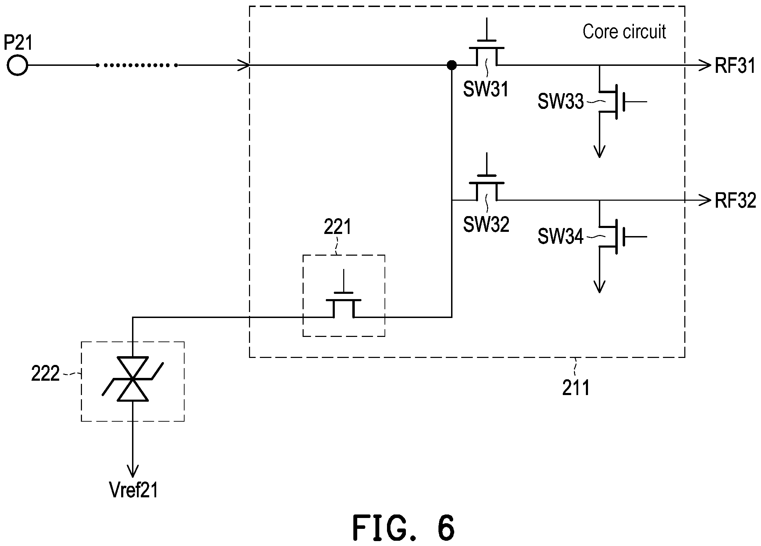

FIG. 2 is a circuit block diagram illustrating a communication system 200 according to an embodiment of the present disclosure. The communication system 200 includes a communication signal terminal P21, a core circuit 211, and an electrical overstress (EOS) protection device 220. The core circuit 211 is coupled to the communication signal terminal P21 through the input terminal ST21 of the core chip 210 and the signal line W21 to send/receive signals. Based on practical applications, the communication signal terminal P21 may be coupled to an antenna (not shown), and the core circuit 211 receives signals from the antenna through the communication signal terminal P21. In an embodiment, the signal at the communication signal terminal P21 may be a signal compliant with Data-Over-Cable Service Interface Specifications (DOCSIS) or other signals. In an embodiment, the core circuit 211 may be a type of RF switch circuit. The core circuit 211 may include a switch element and a communication signal release element (the switch element and the communication signal release element are not shown in FIG. 1, but will be exemplified later in FIG. 5 and FIG. 6). The first terminal of the switch element of the core circuit 211 is coupled to the input terminal ST21 of the core chip 210. The communication signal release element of the core circuit 211 is connected across the second terminal of the switch element and a reference voltage (for example, ground voltage).

The EOS protection device 220 is utilized to protect the core circuit 211. The EOS protection device 220 is controlled by the control signal Sc21, and provides a variable impedance path coupled between the signal line W21 and the reference voltage Vref21 (for example, ground voltage). The EOS protection device 220 includes two operation status: normal operation and EOS discharge operation. In normal operation, according to the control signal Sc21, the EOS protection device 220 is in a "high impedance" state to prevent the signal on the signal line W21 from leaking to the reference voltage Vref21 through the EOS protection device when sending/receiving signals. On the other hand, harmonic distortions may be isolated by providing a high impedance path between the signal line W21 and the harmonic-rich protection device (for example, EOS protection element 222) of the EOS protection device 220. In the EOS discharge operation, the EOS protection device 220 is in a "low impedance" state and provides a low impedance path to release EOS energy from the communication signal terminal P21 to the reference voltage Vref21. Therefore, the EOS protection device 220 both avoids EOS events from damaging the core circuit 211 and prevents that harmonic distortions effects the operating signal on the signal line W21.

The EOS protection device 220 includes an impedance switching element 221 and an EOS protection element 222. The first terminal of the impedance switching element 221 is coupled to the communication signal terminal P21. The first terminal of the EOS protection element 222 is coupled to the second terminal of the impedance switching element 221. The second terminal of the EOS protection element is coupled to the reference voltage Vref21. In an embodiment, when the EOS protection device 220 is in the "high impedance" state, the impedance switching element 221 is turned off to provide at least 10³ Ohm.

The EOS protection element 222 may be any type of element. For example, the EOS protection element 222 includes bidirectional protection elements, transient voltage suppressors (TVS), Polymer ESD Suppressors (PES), Silicon TVS Diode Arrays, thyristors (such as Silicon Control Rectifiers (SCR)), varistors (such as Multi-Layer Varistors (MLV) and Metal Oxide Varistors (MOV)), Gas Discharge Tubes (GDT), or other EOS protection elements. The EOS protection element 222 has noise greater than -70dBm in the frequency range of 10KHz to 10GHz. In an embodiment, the EOS protection element 222 has noise greater than -70dBm in the frequency range of 5MHz to 2GHz. During normal operation, the communication signal release element (not shown in FIG. 1, to be explained later) of the core circuit 211 may be controllably turned on to conduct the communication signal to the reference voltage Vref21 (for example, ground voltage) and the communication signal release element may serve as shunt; or the communication signal release element of the core circuit 211 may be controllably turned off to transmit the communication signal to the interior of the core circuit 211 for processing, for example, to transmit the communication signal to a path within the core circuit 211. For example, the communication system (such as communication system 200, 300, 400) may be a wired cable signal communication system, and the core circuit 211 may be part of a wired cable signal transceiver. When a wired cable signal (for example, a signal compliant with DOCSIS) with an operating frequency range of 5MHz to 2GHz is transmitted on the signal line W21, the EOS protection element 222 will generate noise with a signal strength greater than -70dBm in the frequency range of 10KHz to 10GHz, for example, causing non-linear parasitic effects and resulting in harmonic distortions.

The core circuit 211 (or other control circuit, not shown) may provide a control signal Sc21 to control the impedance switching element 221 to be turned on or turn off. During normal operation, the impedance switching element 221 may controllably provide a high impedance to be turned off. Therefore, the impedance switching element 221 may isolate the non-linear parasitic effects of the EOS protection element 222, avoiding harmonic distortion of the communication signal at the communication signal terminal P21 caused by the EOS protection element 222. During EOS discharge operation, the impedance switching element 221 provides a low impedance to be turned on. The EOS protection element 222 is triggered by an EOS event (for example, an electrostatic discharge event). When the impedance switching element 221 is turned on, the EOS protection element 222 is triggered by the electrostatic at the communication signal terminal P21, thus the charge at the communication signal terminal P21 is immediately released to the reference voltage Vref21 through the impedance switching element 221 and the EOS protection element 222. Based on this, the EOS protection device 220 may protect the core circuit 211 from being damaged by EOS energy.

The core circuit 211, the impedance switching element 221, and the EOS protection element 222 are implemented differently in various design and application scenarios. For example, in some embodiments, the core circuit 211 is disposed on a first chip (core chip 210), the impedance switching element 221 is disposed on a second chip (different from the core chip 210), and the EOS protection element 222 is disposed on a third chip (different from the core chip 210 and the second chip). In other embodiments, the core circuit 211 is disposed on a first chip (core chip 210), while the impedance switching element 221 and the EOS protection element 222 are disposed on a second chip. In yet other embodiments, the core circuit 211 and the impedance switching element 221 are disposed on a first chip (core chip 210), and the EOS protection element 222 is disposed on a second chip. According to the actual design, these chips are arranged on a printed circuit board (PCB) or other circuit boards.

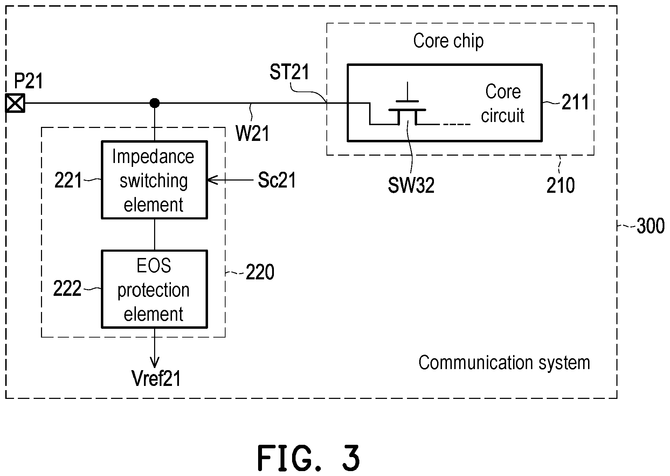

FIG. 3 is a circuit block diagram of a communication system 300 according to another embodiment of the present disclosure. The communication system 300 shown in FIG. 3 includes a communication signal terminal P21, a core circuit 211, and an EOS protection device 220. The core chip 210, the core circuit 211, the input terminal ST21, the signal line W21, the communication signal terminal P21, the EOS protection device 220, the impedance switching element 221, and the EOS protection element 222 shown in FIG. 3 may be inferred from the related description of FIG. 2, so they will not be repeated here. In the embodiment shown in FIG. 3, the core circuit 211 includes a switch element SW32 configured to turn off or turn on the path from the communication signal terminal P21 to receive the signal and to transmit to the core circuit 211. The first terminal of the impedance switching element 221 is coupled between the communication signal terminal P21 and the switch element SW32 of the core circuit 211.

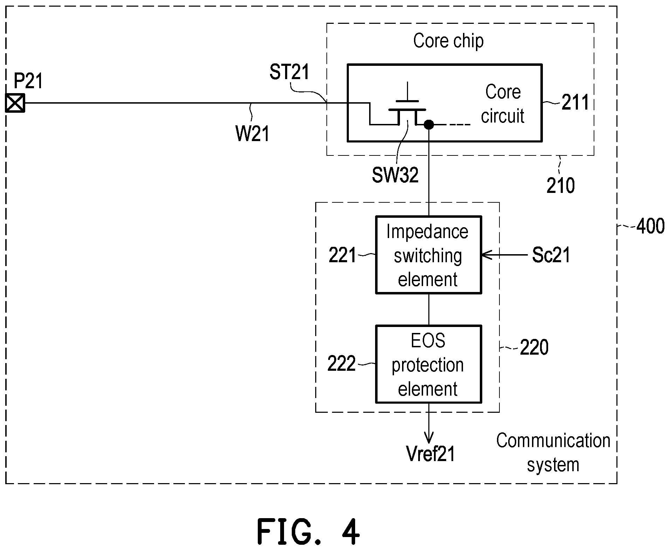

FIG. 4 is a circuit block diagram of a communication system 400 according to yet another embodiment of the present disclosure. The communication system 400 shown in FIG. 4 includes a communication signal terminal P21, a core circuit 211, and an EOS protection device 220. The core chip 210, the core circuit 211, the input terminal ST21, the signal line W21, the communication signal terminal P21, the EOS protection device 220, the impedance switching element 221, and the EOS protection element 222 shown in FIG. 4 may be inferred from the related description of FIG. 2, so they will not be repeated here. In the embodiment shown in FIG. 4, the core circuit 211 includes a switch element SW32. The switch element SW32 shown in FIG. 4 may be inferred from the related description of FIG. 3, so it will not be repeated here. Compared to the embodiment shown in FIG. 3, the first terminal of the switch element SW32 shown in FIG. 4 is coupled to the communication signal terminal P21, and the first terminal of the impedance switching element 221 is coupled to the second terminal of the switch element SW32.

In summary, the impedance switching element 221 is coupled between the communication signal terminal P21 and the EOS protection element 222. In the EOS discharge operation, the impedance switching element 221 is turned on to release the charge from the communication signal terminal P21 to the reference voltage Vref21 through the EOS protection element 222. Therefore, the EOS protection device 220 and the communication system 200 may protect the core circuit 211 from being damaged by the EOS energy. During normal operation, the impedance switching element 221 is turned off. Thus, the impedance switching element 221 may isolate the non-linear parasitic effects of the EOS protection element 222, avoiding harmonic distortion of the signal that was caused by the EOS protection element from effecting to the signal line W21.

FIG. 5 is a circuit block diagram illustrating a core circuit 211, an impedance switching element 221, and an EOS protection element 222 according to an embodiment of the present disclosure. The core circuit 211, the impedance switching element 221, and the EOS protection element 222 shown in FIG. 5 may serve as one of many implementation examples for the core circuit 211, the impedance switching element 221, and the EOS protection element 222 shown in FIG. 2. The core circuit 211, the impedance switching element 221, and the EOS protection element 222 shown in FIG. 5 may also serve as one of many implementation examples for the core circuit 211, the impedance switching element 221, and the EOS protection element 222 shown in FIG. 4. In the embodiment shown in FIG. 5, the impedance switching element 221 includes a switch transistor, and the EOS protection element 222 includes a Zener diode. Based on practical design and application, the impedance switching element 221 may be arranged within the core circuit 211.

The core circuit 211 receives signals through the communication signal terminal P21. In the embodiment shown in FIG. 5, the core circuit 211 includes a radio frequency (RF) switch circuit, and this RF switch circuit includes a switch element SW31, a switch element SW32, a communication signal release element SW33 and a communication signal release element SW34. The communication signal release elements SW33 and SW34 may serve as shunts. During the first stage of normal operation, the switch element SW31 and the communication signal release element SW34 are turned on, while the switch element SW32, the impedance switching element 221, and the communication signal release element SW33 are turned off. At this time, the signal from the communication signal terminal P21 may be transmitted to the path RF31 through the switch element SW31. When the signal from the communication signal terminal P21 is transmitted to the path RF31, the switch element SW32 and the impedance switching element 221 are turned off, thus avoiding harmonic distortion of the signal that was caused by the EOS protection element 222. During the second stage of normal operation, the switch element SW31, the impedance switching element 221, and the communication signal release element SW34 are turned off, while the switch element SW32 and the communication signal release element SW33 are turned on. At this time, the signal from the communication signal terminal P21 may be transmitted to the path RF32 through the switch element SW32. When the signal from the communication signal terminal P21 is transmitted to the path RF32, the impedance switching element 221 is turned off, thus avoiding harmonic distortion of the signal that was caused by the EOS protection element 222. In an embodiment, the first terminal of the impedance switching element 221 may be coupled between the communication signal release element SW34 and the path RF32.

As mentioned above, during the first and second stages of normal operation, the impedance switching element 221 remains turned off. When an EOS event occurs, the impedance switching element 221 is turned on to release the charge to the reference voltage Vref21 through the EOS protection element 222. Therefore, the EOS protection device 220 and the communication system 200 may protect the core circuit 211 from being damaged by the EOS energy.

FIG. 6 illustrates a circuit block diagram of the core circuit 211 according to another embodiment of the disclosure. The core circuit 211 shown in FIG. 6 may serve as one of many implementation examples of the core circuit 211 shown in FIG. 2. The core circuit 211, the impedance switching element 221, and the EOS protection element 222 shown in FIG. 6 may serve as one of many implementation examples of the core circuit 211, the impedance switching element 221, and the EOS protection element 222 shown in FIG. 3. The core circuit 211, the impedance switching element 221, and the EOS protection element 222 shown in FIG. 6 may be referenced to and extrapolated from the related descriptions of FIG. 5, so they will not be repeated here. Based on practical design and application, the impedance switching element 221 may be arranged on the core circuit 211. Different from the embodiment shown in FIG. 5, the first terminal of the impedance switching element 221 shown in FIG. 6 is coupled between the communication signal terminal P21 and the switch element SW32 of the core circuit 211.

In the EOS discharge operation, the impedance switching element 221 is turned on, and the EOS energy (for example, ESD charge) is transmitted to the EOS protection element 222 through the impedance switching element 221. At this time, the charge at the communication signal terminal P21 is released immediately to the reference voltage Vref21 through the impedance switching element 221 and the EOS protection element 222, so as to protect the core circuit 211 from be damaged by the EOS energy. In normal operation, the impedance switching element 221 is turned off, thereby avoiding harmonic distortion of the signal that was caused by the EOS protection element 222.

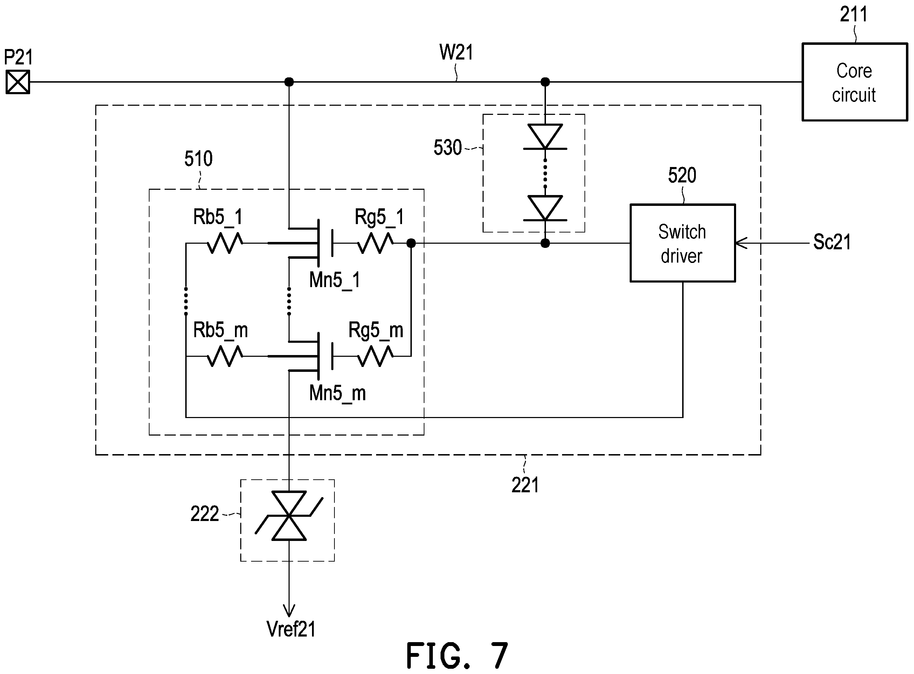

FIG. 7 illustrates a circuit block diagram of the impedance switching element 221 according to an embodiment of the disclosure. The impedance switching element 221 shown in FIG. 7 may serve as one of many implementation examples of the impedance switching element 221 shown in FIG. 2. The core circuit 211, the signal line W21, the communication signal terminal P21, the impedance switching element 221, and the EOS protection element 222 shown in FIG. 7 may be referenced to and extrapolated from the related descriptions of FIG. 2, so they will not be repeated here. In the embodiment shown in FIG. 7, the impedance switching element 221 includes an impedance switching circuit 510, a switch driver 520, and an EOS detection circuit 530. The first terminal of the impedance switching circuit 510 is coupled to the first terminal of the impedance switching element 221, that is, coupled to the signal line W21. The second terminal of the impedance switching circuit 510 is coupled to the EOS protection element 222. The input terminal of the switch driver 520 is coupled to the core circuit 211 to receive the control signal Sc21. The output terminal of the switch driver 520 is coupled to the control terminal of the impedance switching circuit 510. In an embodiment, the impedance switching element 221 includes only one of the switch driver 520 and the EOS detection circuit 530.

The impedance switching circuit 510 includes multi-stacked transistors (for example, the multi-stacked transistors Mn5_1 to Mn5_m shown in FIG. 7). The first terminal of the multi-stacked transistors is coupled to the first terminal of the impedance switching element 221, that is, coupled to the signal line W21. The second terminal of the multi-stacked transistors is coupled to the EOS protection element 222. The control terminal (for example, gate) of each transistor in the multi-stacked transistors is coupled to the control terminal of the impedance switching circuit 510 through a corresponding resistor (for example, resistors Rg5_1 to Rg5_m shown in FIG. 7), that is, coupled to the output terminal of the switch driver 520. In an example application, the bulk of each transistor in the multi-stacked transistors is coupled to the switch driver 520 through a corresponding resistor (for example, resistors Rb5_1 to Rb5_m shown in FIG. 7). In another example application, the bulk of each transistor in the multi-stacked transistors is coupled to a reference voltage (for example, ground voltage) through a corresponding resistor. In an embodiment, at least one transistor of the multi-stacked transistors may be implemented using SOI (Silicon On Insulator) process.

The input terminal of the EOS detection circuit 530 is coupled to the input terminal of the core circuit 211. The output terminal of the EOS detection circuit 530 is coupled to the control terminal of the impedance switching circuit 510. In the embodiment shown in FIG. 7, the EOS detection circuit 530 includes a diode string. The anode terminal of the diode string is coupled to the first terminal of the impedance switching element 221, that is, coupled to the signal line W21. The cathode terminal of the diode string is coupled to the control terminal of the impedance switching circuit 510. The switch driver 520 is configured to turn on/off the impedance switching circuit 510 based on the control signal Sc21. In an embodiment, the switch driver 520 includes a level shift circuit to provide appropriate control voltages to the resistors Rg5_1 to Rg5_m and the resistors Rb5_1 to Rb5_m, and to turn on/off the transistors Mn5_1 to Mn5_m. In normal operation, the impedance switching circuit 510 is in a "high impedance" state, because the switch driver 520 keeps the transistors Mn5_1 to Mn5_m in a turned-off state. Therefore, the impedance switching circuit 510 in the turned-off state may suppress the harmonic effects of the EOS protection element 222.

When in normal operation, the switch driver 520 or the EOS detection circuit 530 turns off the impedance switching circuit 510. For example, during normal operation, the switch driver 520 turns off the impedance switching circuit 510 based on the control signal Sc21. In some application scenarios, when EOS discharge operation occurs, the switch driver 520 or the EOS detection circuit 530 turns on the impedance switching circuit 510 to release the charge to the reference voltage Vref21 through the impedance switching circuit 510 and the EOS protection element 222. For example, when an EOS positive pulse occurs at the communication signal terminal P21, the EOS positive pulse turns on the multi-stacked transistors Mn5_1 to Mn5_m of the impedance switching circuit 510 through the diode string of the EOS detection circuit 530.

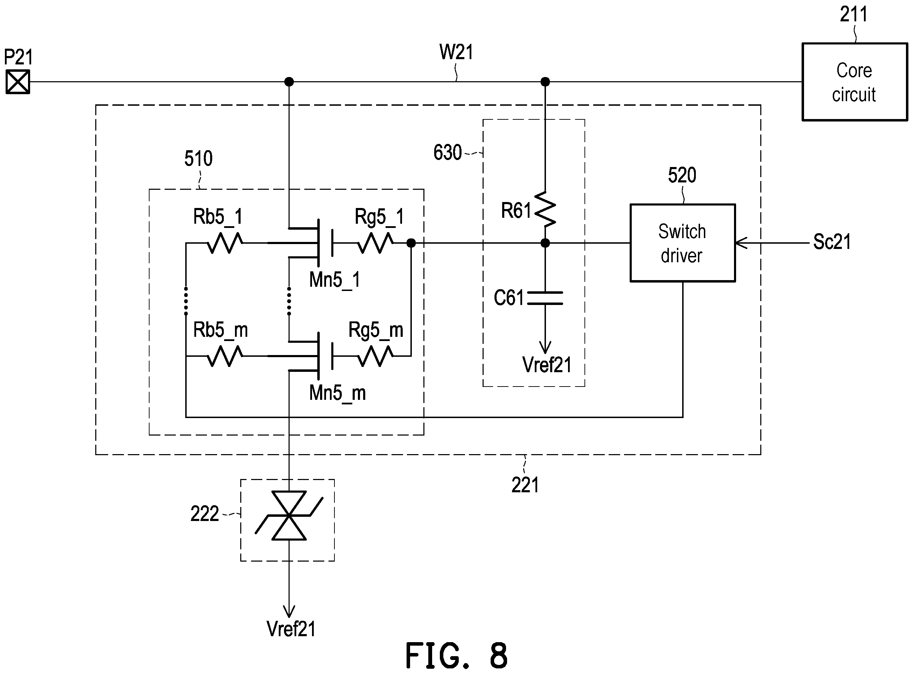

FIG. 8 illustrates a circuit block diagram of the impedance switching element 221 according to another embodiment of the present disclosure. The impedance switching element 221 shown in FIG. 8 may serve as one of many implementation examples of the impedance switching element 221 shown in FIG. 2. The core circuit 211, the signal line W21, the communication signal terminal P21, the impedance switching element 221, and the EOS protection element 222 shown in FIG. 8 may be referenced to and be analogized from the related descriptions of FIG. 2, thus will not be repeated here. In the embodiment shown in FIG. 8, the impedance switching element 221 includes an impedance switching circuit 510, a switch driver 520, and an EOS detection circuit 630. The impedance switching circuit 510, the switch driver 520, and the EOS detection circuit 630 shown in FIG. 8 may be referenced to and be analogized from the related descriptions of the impedance switching circuit 510, the switch driver 520, and the EOS detection circuit 530 shown in FIG. 7, thus will not be repeated here.

In the embodiment shown in FIG. 8, the EOS detection circuit 630 includes a resistor R61 and a capacitor C61. The first terminal of the resistor R61 is coupled to the first terminal of the impedance switching element 221, that is, coupled to the signal line W21. The second terminal of the resistor R61 is coupled to the control terminal of the impedance switching circuit 510. The first terminal of the capacitor C61 is coupled to the control terminal of the impedance switching circuit 510. The second terminal of the capacitor C61 is coupled to the reference voltage Vref21 (for example, ground voltage).

When in normal operation, the switch driver 520 or the EOS detection circuit 630 turns off the impedance switching circuit 510. For example, during normal operation, the switch driver 520 turns off the impedance switching circuit 510 based on the control signal Sc21. In some application scenarios, when EOS discharge operation occurs, the switch driver 520 or the EOS detection circuit 630 turns off the impedance switching circuit 510, wherein the impedance switching circuit 510 breaks down due to electrical overstress to release the charge to the reference voltage Vref21 through the impedance switching circuit 510 and the EOS protection element 222.

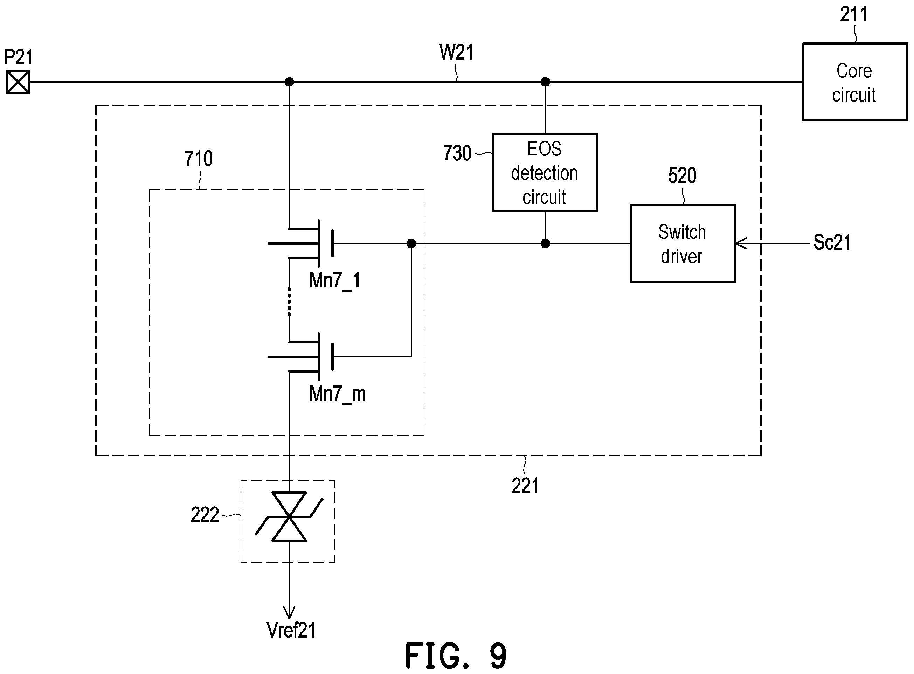

FIG. 9 illustrates a circuit block diagram of the impedance switching element 221 according to yet another embodiment of the present disclosure. The impedance switching element 221 shown in FIG. 9 may serve as one of many implementation examples of the impedance switching element 221 shown in FIG. 2. The core circuit 211, the signal line W21, the communication signal terminal P21, the impedance switching element 221, and the EOS protection element 222 shown in FIG. 9 may be referenced to and be analogized from the related descriptions of FIG. 2, thus will not be repeated here. In the embodiment shown in FIG. 9, the impedance switching element 221 includes an impedance switching circuit 710, a switch driver 520, and an EOS detection circuit 730. The impedance switching circuit 710, the switch driver 520, and the EOS detection circuit 730 shown in FIG. 9 may be referenced to and be analogized from the related descriptions of the impedance switching circuit 510, the switch driver 520, and the EOS detection circuit 630 shown in FIG. 8, or referenced to and be analogized from the related descriptions of the impedance switching circuit 510, the switch driver 520, and the EOS detection circuit 530 shown in FIG. 7, thus will not be repeated here.

In the embodiment shown in FIG. 9, the impedance switching circuit 710 includes multi-stacked transistors (for example, multi-stacked transistors Mn7_1 to Mn7_m shown in FIG. 9). The first terminal of the multi-stacked transistors is coupled to the first terminal of the impedance switching element 221, that is, coupled to the signal line W21. The second terminal of the multi-stacked transistors is coupled to the EOS protection element 222. The control terminal (for example, gate) of each transistor in the multi-stacked transistors is coupled to the control terminal of the impedance switching circuit 710, that is, coupled to the switch driver 520 and the EOS detection circuit 730. In an example, the bulk of each transistor in the multi-stacked transistors Mn7_1 to Mn7_m is electrically floating. In another example application, the bulk of each transistor in the multi-stacked transistors Mn7_1 to Mn7_m is coupled to the switch driver 520. In yet another example, the bulk of each transistor in the multi-stacked transistors Mn7_1 to Mn7_m is directly coupled to a reference voltage (for example, ground voltage).

During normal operation, the switch driver 520 or the EOS detection circuit 730 turns off the impedance switching circuit 710. For example, during normal operation, the switch driver 520 turns off the impedance switching circuit 710 based on the control signal Sc21. In some scenarios, during EOS discharge operation, the switch driver 520 or the EOS detection circuit 730 turns on the impedance switching circuit 710 to release the charge to the reference voltage Vref21 through the impedance switching circuit 710 and the EOS protection element 222. In other scenarios, during EOS discharge operation, the switch driver 520 or the EOS detection circuit 730 turns off the impedance switching circuit 710, where the impedance switching circuit 710 breaks down due to electrical overstress to release the charge to the reference voltage Vref21 through the impedance switching circuit 710 and the EOS protection element 222.

In an embodiment, the switch driver 520 may be utilized to receive an output signal from a microcontroller. The switch driver 520 may receive the output signal and maintain the impedance switching circuit 710 in a turned-off state at least during normal operation.

In an embodiment, the EOS detection circuit 730 may be utilized to detect whether an EOS event occurs on the signal line W21, so as to turn on the impedance switching circuit, or to turn off the impedance switching circuit and cause the impedance switching circuit to break down.

In summary, the impedance switching element 221 is coupled between the communication signal terminal P21 and the EOS protection element 222. During EOS discharge operation, the impedance switching circuit 710 of the impedance switching element 221 is turned on to release the charge from the communication signal terminal P21 to the reference voltage Vref21 through the EOS protection element 222. Therefore, the EOS protection device 220 and the communication system 200 may protect the core circuit 211 from being damaged by the EOS energy. During normal operation, the impedance switching circuit 710 of the impedance switching element 221 is turned off. Thus, the impedance switching circuit 710 of the impedance switching element 221 may isolate the non-linear parasitic effects of the EOS protection element 222, avoiding harmonic distortion of the signal on the signal line W21 that was caused by the EOS protection element 222. Consequently, the EOS protection device 220 and the communication system 200 may prevent harmonic distortion of the signal that was caused by the EOS protection element 222.

## Claims

1. An electrical overstress protection device (220), configured to protect a core circuit (211), the core circuit (211) receiving a signal through a communication signal terminal (P11, P21), and the electrical overstress protection device (220) comprising:
an impedance switching element (221), comprising a first terminal and a second terminal, wherein the first terminal of the impedance switching element (221) is coupled to the core circuit (211); and
an electrical overstress protection element (120, 222), comprising a first terminal and a second terminal, wherein the first terminal of the electrical overstress protection element (120, 222) is coupled to the second terminal of the impedance switching element (221), and the second terminal of the electrical overstress protection element (120, 222) is coupled to a reference voltage (Vref11, Vref21), wherein
when in a normal operation, the impedance switching element (221) controllably provides a high impedance to be turned off; and
when in an electrical overstress discharge operation, the impedance switching element (221) provides a low impedance to be turned on to release a charge to the reference voltage (Vref11, Vref21) through the electrical overstress protection element (120, 222).

2. The electrical overstress protection device (220) as claimed in claim 1, wherein the core circuit (211) comprises a switch element (SW31, SW32) for turning off or turning on a path (RF31, RF32) from the communication signal terminal (P11, P21) to receive the signal and to transmit the signal to the core circuit (211).

3. The electrical overstress protection device (220) as claimed in claim 2, wherein the first terminal of the impedance switching element (221) is coupled between the communication signal terminal (P11, P21) and the switch element (SW31, SW32) of the core circuit (211).

4. The electrical overstress protection device (220) as claimed in one of claims 1-3, wherein the core circuit (211) provides a control signal (Sc21) to control the impedance switching element (221) to turn on or turn off, the impedance switching element (221) comprises an impedance switching circuit (510, 710), and the impedance switching element (221) further comprises a switch driver (520) or an electrical overstress detection circuit (530, 630, 730);
the impedance switching circuit (510, 710) comprises a first terminal, a second terminal and a control terminal, wherein the first terminal of the impedance switching circuit (510, 710) is coupled to the first terminal of the impedance switching element (510, 710), and the second terminal of the impedance switching circuit (510, 710) is coupled to the electrical overstress protection element (120, 222); and
the switch driver (520) comprises an input terminal (ST21) and an output terminal, wherein the input terminal (ST21) of the switch driver (520) is coupled to the core circuit (211) to receive the control signal (Sc21), and the output terminal of the switch driver (520) is coupled to the control terminal of the impedance switching circuit (510, 710); or
the electrical overstress detection circuit (530, 630, 730) comprises an input terminal (ST21) and an output terminal, wherein the input terminal (ST21) is coupled to an input terminal (ST21) of the core circuit (211), and the output terminal is coupled to the control terminal of the impedance switching circuit (510, 710).

5. The electrical overstress protection device (220) as claimed in claim 4, wherein the electrical overstress detection circuit (530, 630, 730) comprises:
a diode string, wherein an anode terminal of the diode string is coupled to the first terminal of the impedance switching element (510, 710), and a cathode terminal of the diode string is coupled to the control terminal of the impedance switching circuit (510, 710).

6. The electrical overstress protection device (220) as claimed in claim 4, wherein the electrical overstress detection circuit (530, 630, 730) comprises:
a resistor (Rg5_1 to Rg5_m, Rb5_1 to Rb5_m, R61), wherein a first terminal of the resistor (Rg5_1 to Rg5_m, Rb5_1 to Rb5_m, R61) is coupled to the first terminal of the impedance switching element (510, 710), and a second terminal of the resistor (Rg5_1 to Rg5_m, Rb5_1 to Rb5_m, R61) is coupled to the control terminal of the impedance switching circuit (510, 710); and
a capacitor (C61), wherein a first terminal of the capacitor (C61) is coupled to the control terminal of the impedance switching circuit (510, 710), and a second terminal of the capacitor (C61) is coupled to the reference voltage (Vref11, Vref21).

7. The electrical overstress protection device (220) as claimed in claim 4, wherein,
when in the normal operation, the switch driver (520) or the electrical overstress detection circuit (530, 630, 730) turns off the impedance switching circuit (510, 710); and
when in the electrical overstress discharge operation, one of the switch driver (520) and the electrical overstress detection circuit (530, 630, 730) turns on the impedance switching circuit (510, 710) or turns off and breaks down the impedance switching circuit (510, 710) to release the charge to the reference voltage (Vref11, Vref21) through the impedance switching circuit (510, 710) and the electrical overstress protection element (120, 222).

8. The electrical overstress protection device (220) as claimed in claim 4, wherein the impedance switching circuit (510, 710) comprises:
a multi-stacked transistor (Mn5_1 to Mn5_m, Mn7_1 to Mn7_m), comprising a first terminal and a second terminal, wherein the first terminal is coupled to the first terminal of the impedance switching element (221), the second terminal is coupled to the electrical overstress protection element (120, 222), and a control terminal of each transistor (Mn5_1 to Mn5_m, Mn7_1 to Mn7_m) in the multi-stacked transistor (Mn5_1 to Mn5_m, Mn7_1 to Mn7_m) is coupled to the control terminal of the impedance switching circuit (510, 710) or the switch driver (520).

9. The electrical overstress protection device (220) as claimed in claim 8, wherein a bulk of the each transistor (Mn5_1 to Mn5_m, Mn7_1 to Mn7_m) in the multi-stacked transistor (Mn5_1 to Mn5_m, Mn7_1 to Mn7_m) is electrically floating or the bulk is coupled to the switch driver (520) or the reference voltage (Vref11, Vref21); or
wherein the control terminal of the each transistor (Mn5_1 to Mn5_m, Mn7_1 to Mn7_m) in the multi-stacked transistor (Mn5_1 to Mn5_m, Mn7_1 to Mn7_m) is coupled to the control terminal of the impedance switching circuit (510, 710) or the switch driver (520) through a resistor (Rg5_1 to Rg5_m, Rb5_1 to Rb5_m, R61).

10. The electrical overstress protection device (220) as claimed in one of claims 1-9, wherein the electrical overstress protection element (120, 222) comprises a transient voltage suppressor or bidirectional protection element.

11. The electrical overstress protection device (220) as claimed in one of claims 1-10, wherein the communication signal terminal (P11, P21) is coupled to an antenna, and the core circuit (211) receives the signal from the antenna through the communication signal terminal (P11, P21).

12. The electrical overstress protection device (220) as claimed in one of claims 1-11, wherein the core circuit (211) further comprises a communication signal release element (SW33, SW34), wherein the communication signal release element (SW33, SW34) is able to be controllably turned on to conduct the signal received by the core circuit (211) to the reference voltage (Vref11, Vref21) when in the normal operation.

13. The electrical overstress protection device (220) as claimed in one of claims 1-12, wherein the electrical overstress protection element (120, 222) has noise greater than -70dBm in a frequency range of 10KHz to 10GHz.

14. The electrical overstress protection device (220) as claimed in one of claims 1-13, wherein the signal is compliant with Data-Over-Cable Service Interface Specifications (DOCSIS).

15. A communication system (200, 300, 400), comprising:
a communication signal terminal (P11, P21);
a core circuit (211), the core circuit (211) comprising a switch element (SW31, SW32) and a communication signal release element (SW33, SW34), wherein a first terminal of the switch element (SW31, SW32) is coupled to the communication signal terminal (P11, P21), and the communication signal release element (SW33, SW34) is connected across a second terminal of the switch element (SW31, SW32) and a reference voltage (Vref11, Vref21);
an impedance switching element (221), comprising a first terminal and a second terminal, wherein the first terminal of the impedance switching element (221) is coupled to the communication signal terminal (P11, P21); and
an electrical overstress protection element (120, 222), coupled between the second terminal of the impedance switching element (221) and the reference voltage (Vref11, Vref21), wherein the electrical overstress protection element (120, 222) has noise greater than -70dBm in a frequency range of 10KHz to 10GHz, wherein
when in a normal operation, the communication signal release element (SW33, SW34) is controllably turned on to conduct a communication signal to the reference voltage (Vref11, Vref21); and
when in an electrical overstress discharge operation, the impedance switching element (221) provides a low impedance to be turned on to release a charge to the reference voltage (Vref11, Vref21) through the electrical overstress protection element (120, 222).
